# EUROPÄISCHE PATENTSCHRIFT

(11) **EP 2 534 222 B1**
(45) Veröffentlichungstag und Bekanntmachung des Hinweises auf die Patenterteilung: **27.11.2013**
(21) Anmeldenummer: 11704408.1
(22) Anmeldetag: 10.02.2011
(51) Int. Cl.: C09K 13/08, G01N 21/33, G01N 21/39

(54) **VERFAHREN ZUR BESTIMMUNG DER KONZENTRATION VON SALPETERSÄURE**
METHOD FOR DETERMINING THE CONCENTRATION OF NITRIC ACID
PROCÉDÉ DE DÉTERMINATION DE LA CONCENTRATION DE L'ACIDE NITRIQUE

(30) Priorität: 12.02.2010 WO PCT/EP2010/000890
(43) Veröffentlichungstag der Anmeldung: 19.12.2012
(73) Patentinhaber: RENA GmbH, 78148 Gütenbach (DE)
(72) Erfinder: REGER, Hubert, 72074 Tübingen (DE)
(74) Vertreter: Stürken, Joachim
(86) Internationale Anmeldenummer: PCT/EP2011/000619
(87) Internationale Veröffentlichungsnummer: WO 2011/098271

(56) Entgegenhaltungen:
- EP-A2- 1 178 526
- DE-A1- 4 331 914
- JP-A- 1 242 940
- JP-A- 11 194 120
- ZIMMER M ET AL: "In-Line Analysis and Process Control in Wet Chemical Texturing Processes", INTERNET CITATION, 7. September 2007 (2007-09-07), Seiten 1-4, XP002606758, Gefunden im Internet: URL:http://www.ise.fraunhofer.de/veroeffen tlichungen/konferenzbeitraege/2 007/22nd-european-photovoltaic-solar-energ y-conference-and-exhibition milano-italy-2007/in-line-analysis-and-pro cess-control-in-wet-chemic al-texturing-processes/at_download/file [gefunden am 2010-10-25]
- HENSZGE ET AL: "Chemical analysis of acidic silicon etch solutions", TALANTA, ELSEVIER, AMSTERDAM, NL, Bd. 73, Nr. 2, 15. August 2007 (2007-08-15), Seiten 220-226, XP022199887, ISSN: 0039-9140, DOI: DOI:10.1016/J.TALANTA.2007.02.004 in der Anmeldung erwähnt

## Beschreibung

Die vorliegende Erfindung betrifft das Gebiet der nasschemischen Behandlung von Siliziumsubstraten. Insbesondere betrifft die Erfindung ein Verfahren zur Bestimmung der Konzentration von Salpetersäure in wässrigen Prozesslösungen, wie sie für die Behandlung von Substraten wie solchen aus Silizium zur Anwendung kommen.

Säuremischungen, die Salpetersäure (HNO₃) enthalten, werden in großem Stil zum Reinigen, Aufrauen, aber auch zum Glätten von verschiedenen Substraten wie insbesondere solchen aus Silizium eingesetzt. In den genannten Säuremischungen wird die Salpetersäure zur Oxidation des Substrats eingesetzt. In Ergänzung zu der oxidierenden Komponente enthalten diese Säuremischungen fluoridhaltige Verbindungen, wie z.B. Flusssäure, Ammoniumfluorid, Natriumfluorid, oder solche, die in der Lage sind, mit dem oxidierten Substrat zu reagieren wie beispielsweise dieses zu lösen.

Ferner werden diesen Säuremischungen erforderlichenfalls weitere Inhaltsstoffe beigemischt, wie z.B. Schwefelsäure, Phosphorsäure oder Tenside.

Zu den wichtigsten Anwendungen genannter Säuremischungen gehören das Texturieren (Aufrauen) und das Polieren (Glätten) von Substraten wie insbesondere Wafern aus Silizium in der Photovoltaik und Halbleiterindustrie. Auch die sogenannte Kantenisolation von Wafern im Rahmen der Herstellung von Elementen für die Photovoltaik lässt sich wirksam mit solchen Säuremischungen durchführen. Weitere Anwendungen dieser Säuremischungen betreffen z.B. die Vorbehandlung von Siliziumsubstraten für die Abscheidung von Metallen, und das gezielte Auflösen von Silizium oder Siliziumverbindungen.

Wie dem Fachmann bekannt ist, besitzen die vorstehend genannten Prozesse eine hohe wirtschaftliche Bedeutung.

Die Zusammensetzung der Säuremischungen, so auch der Gehalt an Salpetersäure, hat bei allen der aufgeführten Anwendungen eine hohe Relevanz für das Behandlungsergebnis.

Die Veränderung des Substrats beruht auf komplexen chemischen Reaktionen der Säuren mit der Substratoberfläche. Im Verlauf dieser Reaktionen werden demzufolge die Säuren verbraucht, und es werden neue Reaktionsprodukte gebildet, welche eine einfache, sichere und gut automatisierbare Bestimmung des Salpetersäuregehalts bisher verhindert haben. Demgemäß entstehen im Rahmen der erfindungsgemäß relevanten Verfahren zur nasschemischen Säurebehandlung von Siliziumsubstraten einerseits flüssige Reaktionsprodukte wie beispielsweise Hexafluorokieselsäure (H₂SiF₆) und Wasser, andererseits aber auch gasförmige Reaktionsprodukte wie zum Beispiel NOₓ und flüchtige Fluor/Silizium-Verbindungen, die teilweise aus der Prozesslösung entweichen, z.T. aber auch im Behandlungsmedium gelöst werden.

Dabei kann der Reaktionsmechanismus, die Reaktionsgeschwindigkeit sowie die Art und die Lage der chemisch/physikalischen Gleichgewichte variieren in Abhängigkeit von Parametern wie z.B. der relativen Konzentration der verschiedenen Inhaltsstoffe, der Temperatur, der Turbulenz in der Prozesslösung, und der Beschaffenheit der Substratoberfläche.

Es existieren verschiedene umfangreiche wissenschaftliche Arbeiten, sowohl älteren wie auch neuesten Datums, welche sich mit der Aufklärung dieser Zusammenhänge befassen (s. z.B. M. Steinert et al., Study on the mechanism of silicon etching in HN03-rich HF/HNO3 mixtures, J. Phys. Chem., 111, 2133-2140, 2007). Diese Arbeiten aus der Grundlagenforschung haben in erheblichem Maße zum Verständnis der Abläufe beigetragen, zahlreiche Fragen sind aber noch offen.

Darüber hinaus wird seit vielen Jahren mit hoher Intensität daran geforscht, die praktische Anwendung dieser theoretischen Erkenntnisse im Sinne einer prozessbegleitenden physikalischen und chemischen Analyse der Prozesse voranzutreiben (s. z.B. A. Henßge, J. Acker, Chemical analysis of acidic silicon etch solution, I. Titrimetric determination of HNO3, HF, and H2SiF6, Talanta 73, 220-226, 2007; J. Acker, A. Henßge, Chemical analysis of acidic silicon etch solution, II. Determination of HNO3, HF, and H2SiF6 by ion chromatography, Talanta 72, 1540-1545, 2007; M. Zimmer et al., In-line analysis and process control in wet chemical texturing process, 22nd European Photovoltaic Solar Energy Conference and Exhibition, Milano, Italy, 2007; W. Weinreich et al., Determination of total fluoride in HF/HNO3/H2SiF6 etch solution by new potentiometric titration methods, Talanta 71, 1901-1905, 2007; US 7,351,349 B2; M. Zimmer et al., Spectroscopical inline analysis of wet chemical process, 23rd European Photovoltaic Solar Energy Cconference, Valencia, Spain, 2008; M. Zimmer et al., NIRspectroscopical process control for wet chemical processes, 24th European Solar Energy Conference, Hamburg, Germany, 2009).

Bei der Bestimmung der prozessrelevanten Inhaltsstoffe in genannten Säuremischungen nimmt die Bestimmung der Salpetersäure eine Schlüsselrolle ein. So lässt sich bei bekannter Konzentration der Salpetersäure mit einer einfachen zusätzlichen Titration mit Lauge in wässrigem Medium auch der Gehalt an Flusssäure berechnen.

Im Stand der Technik stehen für die Bestimmung der Salpetersäure verschiedene Analysenverfahren aus dem Bereich der Titration, NIR-Spektroskopie, UV-Spektrometrie/Fotometrie und Chromatographie zur Verfügung. Diese bekannten Verfahren sind jedoch nicht in der Lage, die an die vorliegende Erfindung gestellten Anforderungen hinsichtlich der Bereitstellung verlässlicher und exakter Daten zu erfüllen.

Mittels Titration ist zwar die Summe der Säuren gut bestimmbar. Eine separate Erfassung der Salpetersäure mittels Titration ist aber, wenn überhaupt, nur mit erheblichen Nachteilen möglich. So wird verschiedentlich angegeben, Salpetersäure in den genannten Säuremischungen separat titrieren zu können, indem als Titriermedium anstatt Wasser organische Lösungsmittel wie z.B. Aceton verwendet werden. Für den Einsatz unter Prozessbedingungen ist eine solche Titration in Lösungsmitteln jedoch wenig geeignet. Zudem treten in Gegenwart von Silizium erhebliche Probleme auf (s. z.B. A. Henßge und J. Acker, a.a.O.).

Eine weitere Möglichkeit der Bestimmung der Salpetersäure mittels Titration besteht darin, dass zusätzlich zur Titration der Säuren mit Lauge eine zweite Titration mit einer Lanthansalz-Lösung als Titriermittel angewendet wird zur Erfassung der Summe der fluoridhaltigen Verbindungen (s. W. Weinreich et al., a.a.O.). Durch Verrechnung der Resultate beider Titrationen kann der Gehalt an Salpetersäure bestimmt werden.

Die Titration mit Lanthansalz-Lösung hat allerdings im Rahmen industrieller Anwendungen einen entscheidenden wirtschaftlichen Nachteil. Das Element Lanthan gehört zu den seltenen Erden. Die für die permanente Erfassung der fluoridhaltigen Verbindungen erforderlichen Mengen an Lanthan liegen bei einer angenommenen Durchführung von sechs Analysen pro Stunde in einer Größenordnung von 50.000 ∈ pro Jahr.

Als Alternative zur Titration wird in jüngster Zeit insbesondere die NIR-Spektroskopie für die Analyse der Salpetersäure in genannten Säuremischungen propagiert

Die Säuren HF, HNO₃ und H₂SiF₆ können mit der NIR-Spektroskopie ohne Probenabmessungen und ohne Probenbehandlung in einer Durchflusszelle mit guter Präzision separat erfasst werden. Der apparative Aufbau ist zudem einfach, die Analysenzeiten sind extrem kurz, die Anschaffungskosten erschwinglich und die laufenden Betriebskosten niedrig.

Die spezielle Anwendung der NIR-Spektroskopie für die Analyse von Säuremischungen ist in verschiedenen Publikationen beschrieben (s. z.B. US 7,351,349 B2; M. Zimmer et al., a.a.O. (2008); M. Zimmer et al., a.a.O. (2009).

Ein Nachteil bei der Anwendung der NIR-Spektroskopie ist der für die Erstellung der Auswertemodelle erforderliche hohe Kalibrieraufwand. Die NIR-Spektroskopie weist in der speziellen erfindungsgemäßen Anwendung, nämlich der Prozessanalyse der genannten Säuremischungen, allerdings auch besonders gravierende Nachteile auf.

Die bei der erfindungsgemäßen Anwendung vorhandenen Säuren HNO₃, H₂SiF₆ und HF besitzen im NIR-Bereich keinerlei eigene Absorptionen. Die genannten Säuren deformieren lediglich in spezifischer Weise die Absorptionsbanden von Wasser und lassen sich somit nur indirekt bestimmen. Der Unterschied in der spezifischen Deformierung der Wasserbanden durch die verschiedenen Säuren fällt außerdem äußerst gering aus.

Der Einsatz der NIR-Spektroskopie für die Bestimmung der genannten Säuremischungen unter rauen Umgebungsbedingungen, wie sie im realen industriellen Einsatz vorliegen, muss von daher als sehr kritisch bewertet werden.

Grundsätzlich kommt für die Bestimmung von Salpetersäure auch die UV-Spektrometrie/Fotometrie in Frage.

Es ist bekannt, dass Nitrat (NO₃⁻), das Anion der Salpetersäure im UV-Bereich unterhalb von ca. 330 nm sehr intensiv Strahlung absorbiert und dort mit entsprechend hoher Empfindlichkeit gemessen werden kann. Selbst die geringen Nitrat-Gehalte in Wässern und Abwässern, welche in der Größenordnung von 1-20 mg/l liegen, können im UV-Bereich bei einer Wellenlänge von ca. 220 nm direkt bestimmt werden.

Die UV-Spektrometrie/Fotometrie ist sehr genau, empfindlich, kostengünstig und robust und damit prinzipiell auch für die Prozessanalytik hervorragend geeignet. In der Literatur ist verschiedentlich auch deren Einsatz für die Bestimmung der Salpetersäure in genannten Säuremischungen beschrieben.

Es hat sich allerdings gezeigt, dass diese Verfahren in der realen Praxis nur bedingt einsetzbar sind, nämlich nur solange, wie die die Erfindung betreffenden Säuremischungen noch nicht genutzt wurden. Schon nach geringem bestimmungsgemäßem Gebrauch, d.h. bereits nachdem nur geringe Mengen Substrat mit den Säuremischungen behandelt wurden, ist der für die Bestimmung von Nitrat relevante Bereich im UV-Spektrum von kleiner ca. 330 nm durch anderweitige Absorptionen hoffnungslos überlagert.

Gemäß Offenbarung in EP 1 178 526 A2 und JP 11 194120 A werden Aliquots von Säuremischungen stark mit Wasser verdünnt, und anschließend wird die Absorption der verdünnten Ansätze bei 302 nm gemessen. Durch die Verdünnung wird das Gleichgewicht zwischen NOx und Nitrit in Richtung Nitrit verlagert, wobei jedoch sowohl Nitrit als auch Nitrat gleichermaßen im UV Bereich kleiner gleich 330 nm absorbieren. Erschwerend kommt hinzu, dass die Absorption des Nitrits zusätzlich von der Konzentration der Gesamtsäure abhängig ist. In der aktuellen Literatur wird nicht von ungefähr für die Bestimmung von Nitrat in Texturierungsbädern für die Photovoltaik, wo bedingt durch den hohen Waferdurchsatz die NOx Konzentration besonders hoch ist, die Ionenchromatographie als Referenzverfahren favorisiert. Hierbei wird die Säuremischung zwar ebenfalls mit Wasser verdünnt, anschließend aber wird die verdünnte Probe über eine Trennsäule gepumpt, so dass Nitrat und Nitrit nacheinander und separat dem UV- oder Leitfähigkeitsdetektor zugeführt werden. Die Anwendung der Ionenchromatographie für die Analyse solcher Säuremischungen ist in der Literatur umfangreich beschrieben. Angesichts der erforderlichen empfindlichen Trennsäulen, des hohen apparativen Aufwandes und der hohen Unterhaltskosten bleibt die Ionenchromatographie jedoch in erster Linie ein für die Anwendung im Labor geeignetes Analysenverfahren.

Ein robustes, d.h. für jedwede nasschemische Anwendung der vorstehend genannten Art einsetzbares Überwachungs- und ggf. Steuerungsverfahren, welches für Salpetersäure sowohl verlässliche als auch exakte Daten liefert, konnte trotz aller Bemühungen bisher nicht gefunden werden. Ein solches Verfahren, ggf. in Verbindung mit einer geregelten Zugabe verbrauchter Chemikalien, ist jedoch Voraussetzung für konstante Behandlungsergebnisse.

Die Aufgabe der vorliegenden Erfindung liegt daher in der Bereitstellung eines Verfahrens, mit welchem die Nachteile des Standes der Technik überwunden werden können. Insbesondere soll das erfindungsgemäße Verfahren eine zuverlässige Bestimmung der Konzentration von Salpetersäure in solchen wässrigen Medien ermöglichen, die Salpetersäure und fluoridhaltige Verbindungen enthalten und zur nasschemischen Behandlung von Siliziumsubstraten eingesetzt werden. Dabei soll das Verfahren gleichermaßen für benutzte wie unbenutzte Medien geeignet sein.

Die Aufgabe wird durch Bereitstellung des Verfahrens gemäß Hauptanspruch gelöst. Eine bevorzugte Ausführungsform ist Gegenstand des Unteranspruches.

Das erfindungsgemäße Verfahren dient der Bestimmung der Konzentration von Salpetersäure in wässrigen Medien, die Salpetersäure und fluoridhaltige Verbindungen enthalten, während einer nasschemischen Behandlung von Siliziumsubstraten, bei der NOₓ-Verbindungen gebildet werden, durch Bestimmung der Konzentration von Nitrat mittels UV-Spektrometrie/Fotometrie in Gegenwart oder Anwendung mindestens eines die NOₓ bedingten Störungen im UV-Absorptionsspektrum von Nitrat eliminierenden Mittels, wobei die UV-Spektrometrie/Fotometrie in einem Wellenlängenbereich von Kleiner gleich 330 nm erfolgt und als Eliminierungsmittel.

Die Konzentration von Nitrat entspricht dabei derjenigen von Salpetersäure.

Erfindungsgemäß wird ein robustes Verfahren vorgeschlagen, mit dem sich der Gehalt an Salpetersäure in Säuremischungen sehr präzise bestimmen lässt, und zwar gleichermaßen in unbenutzten wie in benutzten Säuremischungen.

Im Rahmen der zur vorliegenden Erfindung durchgeführten Arbeiten wurde überraschenderweise festgestellt, dass die Störung des für die Nitratmessung wichtigen UV-Bereiches von kleiner als ca. 330 nm durch Zugabe von z.B. Harnstoff nahezu völlig beseitigt werden kann. Die Säuremischung kann demzufolge nach Zugabe von Harnstoff auch ohne zusätzliches Verdünnen gemessen werden. Lediglich die Schichtdicke der Messzelle muss entsprechend dünn gewählt werden. Damit ist belegt, dass wider Erwarten nicht auch andere Reaktionsprodukte, welche aus der Umsetzung der Säuremischung mit dem Substrat entstehen, für die störenden Absorptionen im UV Bereich von kleiner ca. 330 nm ursächlich sind, sondern in erster Linie NOx-Verbindungen.

Der vorliegend verwendete Begriff "NOₓ-Verbindungen" betrifft Stickoxide, Nitrosegase oder Stickstoffoxide und bezeichnet somit gasförmige Oxide des Stickstoffs. Sie werden vorliegend mit NOₓ abgekürzt, da es aufgrund der vielen Oxidationsstufen des Stickstoffs mehrere Stickstoff-Sauerstoff-Verbindungen gibt (N₂O, NO, N₂O₃, NO₂, N₂O₄, N₂O₅).

Weitere Experimente zeigten, dass neben Harnstoff auch Amidosulfonsäure und andere nachfolgend aufgeführte Mittel zur Eliminierung der durch anwesende NOₓ Verbindungen verursachten Störungen im relevanten UV-Bereich sowohl einzeln als auch in Kombination eingesetzt werden können.

Der erfindungsgemäß genutzte Mechanismus zur Eliminierung der Störung des für die Bestimmung von Salpetersäure mittels UV-Spekrometrie/Fotometrie wichtigen Wellenlängenbereichs von kleiner ca. 330 nm ist in Abhängigkeit der tatsächlichen Auswahl eines oder mehrerer Vertreter der Gruppe geeigneter Eliminierungsmittel unterschiedlich.

Folgende Kriterien müssen bei der Auswahl und Zugabe oder Verwendung eines geeigneten Elimierungsmittels erfüllt sein, damit das erfindungsgemäße Verfahren erfolgreich angewendet werden kann.

Der der Menge an vorhandener Salpetersäure entsprechende zu messende Gehalt an Nitrat darf durch das oder die Elimierungsmittel nicht verändert werden. Demzufolge dürfen bei der Eliminierung der NOₓ-Störung keine die Messung beeinträchtigenden Mengen an Nitrat entstehen. Ferner dürfen durch die Anwendung keine relevanten Mengen an Nitrat verbraucht werden.

Das Eliminierungsmittel muss die durch die NOₓ Verbindungen verursachte Störung des für die Nitratmessung relevanten Wellenlängenbereichs im UV-Spektrum von kleiner ca. 330 nm beseitigen oder zumindest so weit zurückdrängen, dass zumindest durch Einsatz der multivariaten Datenanalyse eine Auswertung des Nitrat-Peaks möglich ist.

Das Eliminierungsmittel und dessen Reaktionsprodukte soll selbst keine Absorption im dem für die die Nitratmessung relevanten Wellenlängenbereichs im UV-Spektrum von kleiner ca. 330 nm aufweisen. Zumindest muss die durch das Eliminierungsmittel und dessen Reaktionsprodukte verursachte Absorption im genannten Wellenlängenbereich so gering sein, dass durch Einsatz der multivariaten Datenanalyse eine Auswertung des Nitrat-Peaks möglich ist.

Das Eliminierungsmittel soll die störenden NOₓ Verbindungen so beseitigen, dass aus den Reaktionsprodukten der NOₓ Verbindungen keine neuen Störungen im relevanten UV-Bereich entstehen. Zumindest muss die durch die Reaktionsprodukte der NOₓ Verbindungen verursachte Störung des Nitrat-Peaks im genannten Wellenlängenbereich so gering sein, dass durch Einsatz der multivariaten Datenanalyse eine Auswertung des Nitrat-Peaks möglich ist.

Neben Harnstoff und Unter Berücksichtigung der vorstehenden Kriterien erfolgt die Auswahl eines oder mehrerer weiterer geeigneter Mittel zur Eliminierung der durch NOₓ verursachten Störung (en) aus der Gruppe bestehend aus:
(1) Ammoniak und Abkömmlingen des Ammoniaks, wie z.B. Amide, Amidosulfonsäuren, Formamid, Azetamid, sowie Mischungen daraus. Der Mechanismus beruht auf der Reduktion von NOₓ unter entsprechenden Reaktionsbedingungen zum gasförmigen Stickstoff;
(2) Aminosäuren wie insbesondere Glycin und primäre Amine. Der Mechanismus beruht auf der Reduktion von NOₓ unter entsprechenden Reaktionsbedingungen zum gasförmigen Stickstoff über instabiles Diazoniumsalz;
(3) anderen Aminen wie z.B. Sulfanilsäure. Die Wirkung beruht auf der Reaktion mit NOₓ unter Bildung verschiedener Verbindungen wie z.B. Diazoniumsalzen;
(4) Reduktionsmitteln wie z.B. Sulfite bzw. schwefelige Säure und Oxalsäure und deren Salze. Die Wirkung beruht auf der Reduktion von NOₓ unter entsprechenden Reaktionsbedingungen zum gasförmigen Stickstoff oder anderen Verbindungen, die den Nitrat-Peak nicht stören; und
(5) Mischungen daraus.

Neben Harnstoff können die vorstehend zur Auswahl im Rahmen des Verfahrens vorgeschlagenen weiteren Substanzen und Verbindungen sowohl einzeln als auch in Kombination als Festsubstanz oder in Lösung zugegeben werden, wobei die jeweilige Zugabe, bezogen auf NOₓ, im molaren Überschuss erfolgen sollte. Sofern erforderlich, können die entstehenden Ansätze zur Beschleunigung der Umsetzung nach Bedarf erwärmt werden.

Erfindungsgemäß können die vorgeschlagenen Substanzen und Verbindungen auch in einer Art von Kartusche eingebracht sein, welche von der Probelösung durchströmt wird.

Erfindungsgemäß kann das Eliminierungsmittel alternativ oder zusätzlich durch (6) mit Diamant oder Elektronen-Transfer-Mediatoren (z.B. Thionin oder Metallporphyrine) speziell behandelten stromführenden (Festkörper)Elektroden (z.B. B-doped Diamant-Elektroden; Glassy Carbon Elektroden) bereitgestellt werden. Die Wirkungsweise dieser Anwendung zur Eliminierung beruht auf einer elektrochemischen Reduktion von NOₓ an speziellen Elektroden der vorstehend genannten Art. Diese alternative Ausführungsform benötigt außer der erforderlichen Stromzufuhr für die Elektroden keine weiteren unter (1) bis (5) aufgeführten Substanzen oder Verbindungen.

Schließlich kann als Mittel zur Eliminierung alternativ oder in Kombination mit den unter (1) bis (5) aufgeführten Substanzen oder Verbindungen gemäß (7) Wasserstoff und/oder Ameisensäure eingesetzt werden. Die elektrochemische Reduktion von NOₓ erfolgt hierbei katalytisch z.B. an Palladium oder mit Palladium dotierten Katalysatoren durch Zuführung von Wasserstoff oder direkter Erzeugung von Wasserstoff am Katalysator oder durch Zugabe von Reduktionsmitteln wie z.B. Ameisensäure oder Formiat.

Erfindungsgemäß kann somit die Konzentration von Nitrat in den genannten Säuremischungen nach entsprechender Anwendung von zumindest Harnstoff als Eliminierungsmittel unter Anwendung der UV-Spektrometrie/Fotometrie direkt bestimmt werden.

Der im erfindungsgemäßen Verfahren ermittelte Gehalt an Nitrat kann mit dem Gehalt an Salpetersäure gleichgesetzt werden, da außer den Nitrat-Ionen aus der Salpetersäure anderweitig praktisch kein Nitrat vorhanden ist.

Das erfindungsgemäße Eliminierungsmittel ist Harnstoff, der im molaren Überschuss gegenüber den NOₓ-Verbindungen eingesetzt wird, wobei sich eine Menge von 0,2 Mol Harnstoff bezogen auf einen Liter Säuremischung als ausreichend erwiesen hat.

Das Eliminieren kann apparatetechnisch auch als ein sich selbst optimierender Vorgang ausgelegt werden. Dabei wird automatisch das Eliminierungsmittel mehrfach dosiert und der am besten geeignete Peak ausgewertet.

Etwaige verbleibende Überlagerungen des Nitrat-Spektrums können erforderlichenfalls mittels der multivariaten Datenanalyse mathematisch kompensiert werden.

Prinzipiell kann die Zugabe oder Anwendung eines oder mehrerer Eliminierungsmittel zur Probe sowohl batchweise als auch kontinuierlich im Durchfluss erfolgen.

Nach einer bevorzugten Ausführungsform werden zur UV-Spektrometrie/Fotometrie Messzellen aus Saphir eingesetzt. Alternativ wird die Verwendung von Messzellen aus fluorierten Kohlenwasserstoffen vorgeschlagen, wenngleich aufgrund ihrer hohen Eigenabsorption eine erhebliche höhere Lichtleistung erforderlich ist.

Als Lichtquelle für die Spektroskopie sind verschiedene Leuchtmittel geeignet wie z.B. kontinuierlich strahlende Deuteriumlampen, gepulste Xenon-Blitzlampen oder Laserlichtquellen. Laserlichtquellen wie z.B. Laserdioden zeichnen sich dadurch aus, dass sie nur in einem schmalen Wellenlängenbereich Licht aussenden und neuerdings auch für Wellenlängen bis hinunter zu Ultraviolett (UV) zu einem akzeptablen Preis verfügbar sind.

Sofern die Emission der Laserdiode auf die Absorptionswellenlänge des Analyten abgestimmt ist, genügt zur Detektion der absorbierten Lichtmenge eine breitbandige Photodiode anstelle eines Spektrometers mit Beugungsgitter und Diodenarray.

Das erfindungsgemäße Verfahren eignet sich sowohl zur online- und at-line-Prozessanalyse als auch zur Durchführung der Analyse im Labor. Dies gilt sowohl für die gerätetechnische Ausführung in Form eines einzigen Gerätes wie für die Kombination mit anderen Geräten und Verfahren wie z.B. Titration und/oder NIR-Spektroskopie.

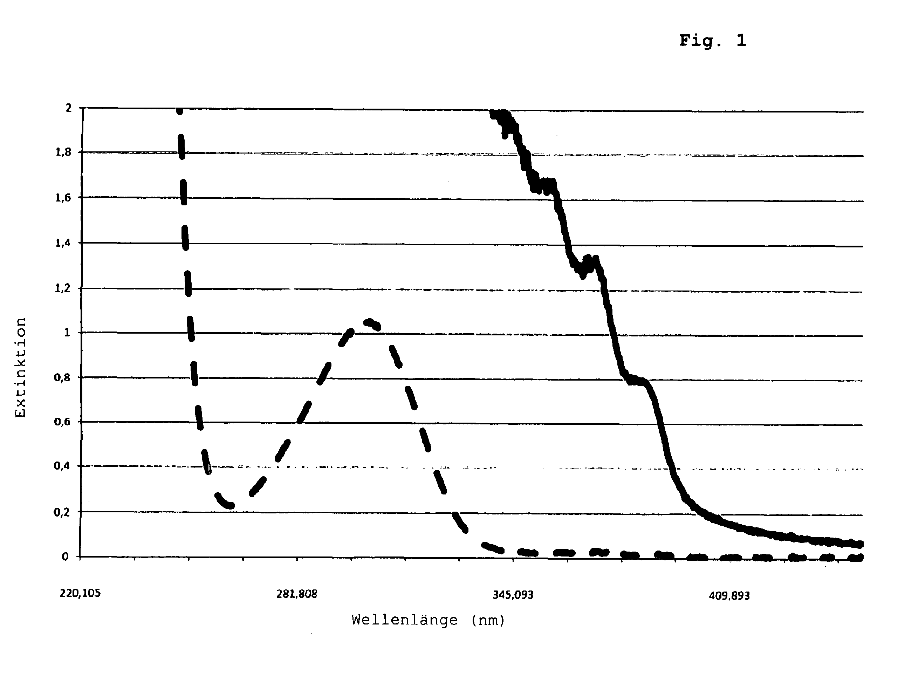

Die vorliegenden Erfindung wird anhand eines nicht beschränkenden Beispiel unter Bezugnahme auf die Figur 1 näher erläutert.

### Ausführungsbeispiel

Das oben erläuterte Verfahren wurde im Rahmen einer nasschemischen Behandlung von Siliziumsubstraten angewendet. Die Substrate wurden auf geeigneten Transportmitteln aufliegend horizontal durch einen Behalter transportiert, welcher eine Ätzflüssigkeit enthielt, die neben Wasser Flusssäure (15 Gew.%) und Salpetersäure (35 Gew.%) umfasste. Da sich beim Ätzen von Siliziumsubstraten Reaktionsprodukte bilden, die die Echtzeitbestimmung von Salpetersäure auf direktem Wege mittels UV-Spektrometrie/Fotometrie behindern oder sogar unmöglich machen, wurden 2,5 ml Probe der Ätzflüssigkeit 2,5 ml einer 0,2 molaren Harnstofflösung zugegeben. Mit dieser Mischung erfolgte die spektrometrische Bestimmung der Nitratmenge unter Verwendung einer Küvette aus Saphir mit einer Schichtdicke von 5 mm innerhalb eines Wellenlängenbereichs von 200 bis 330 nm.

Die Ergebnisse sind in Figur 1 dargestellt. Die durchgezogene Linie repräsentiert das gemessene UV-Spektrum der Ätzflüssigkeit ohne Zugabe des Eliminierungsmittels. Die gestrichelte Linie zeigt das Ergebnis unter Zusatz von Harnstoff. Wie die Abbildung zeigt, konnte der zu erwartende Nitrat-Peak, der im Kontrollversuch durch die entstandenen NOₓ-Verbindungen maskiert war, deutlich dargestellt werden, sodass eine verlässliche Quantifizierung der Konzentration von Nitrat- bzw. Salpetersäure möglich war.

## Patentansprüche

1. Verfahren zur Bestimmung der Konzentration von Salpetersäure in wässrigen Medien, die Salpetersäure und fluoridhaltige Verbindungen enthalten, während einer nasschemischen Behandlung von Siliziumsubstraten, bei der NOₓ-Verbindungen gebildet werden, durch Bestimmung der Konzentration von Nitrat mittels UV-Spektrometrie/Fotometrie in Gegenwart oder Anwendung mindestens eines die NOₓ bedingten Störungen im UV-Absorptionsspektrum von Nitrat eliminierenden Mittels, wobei die UV-Spektrometrie/Fotometrie in einem Wellenlängenbereich von kleiner gleich 330 nm erfolgt und als Eliminierungsmittel Harnstoff eingesetzt wird.

2. Verfahren nach Anspruch 1, **dadurch gekennzeichnet, dass** zur UV-Spektrometrie/Fotometrie Messzellen aus Saphir oder UV-Licht durchlässigen Kunststoffen eingesetzt werden.

## Claims

1. Method for the determination of the concentration of nitric acid in aqueous media which contain nitric acid and fluoride-containing compounds in the course of a wet chemical treatment of silicon substrates in which NOₓ-compounds are formed, by determination of the concentration of nitrate by means of UV spectroscopy/photometry in the presence or application of at least one agent eliminating the disturbances in the UV absorption spectrum of nitrate caused by NOₓ, wherein the UV spectroscopy/photometry takes place in a wavelength range of less than or equal to 330 nm and urea is used as eliminating agent.

2. Method according to claim 1, **characterized in that** measuring cells made of sapphire or UV-light transparent plastics are used for UV spectroscopy/photometry.

## Revendications

1. Procédé pour la détermination de la concentration en acide nitrique dans des milieux aqueux qui contiennent de l'acide nitrique et des composés fluorés pendant un traitement par voie humide de substrats en silicium au cours duquel des composés NOₓ sont formés, par la détermination de la concentration en nitrates par spectrométrie UV/photométrie en présence ou en utilisant au moins une interférence provoquée par les NOₓ dans le spectre d'absorption dans l'UV de l'agent éliminateur de nitrate, la spectrométrie UV/photométrie étant réalisée dans un intervalle de longueurs d'ondes inférieur ou égal à 330 nm et l'urée étant utilisée comme agent éliminateur.

2. Procédé selon la revendication 1 **caractérisé en ce que** les cuvettes de mesure utilisées pour la spectrométrie UV/photométrie sont en saphir ou en matières plastiques transparentes à la lumière UV.
